Europäisches Patentamt

European Patent Office

Office européen des brevets

(19)

(11) Publication number: **0 134 973**
**B1**

(12) **EUROPEAN PATENT SPECIFICATION**

(45) Date of publication of patent specification: **02.11.89**

(21) Application number: **84107842.1**

(22) Date of filing: **05.07.84**

(51) Int. Cl.⁴: **B 29 C 67/14,** C 08 L 81/02, C 08 J 5/04, C 08 K 7/04 // B29K81/00

(54) Stampable sheets of fiber mat reinforced poly(arylene sulfide) and method of preparation.

(30) Priority: **12.07.83 US 513185**

(43) Date of publication of application:
**27.03.85 Bulletin 85/13**

(45) Publication of the grant of the patent:
**02.11.89 Bulletin 89/44**

(84) Designated Contracting States:
**AT BE CH DE FR GB IT LI LU NL SE**

(56) References cited:
**EP-A-0 013 244
EP-A-0 029 910
US-A-4 115 283
US-A-4 389 453**

(73) Proprietor: **PHILLIPS PETROLEUM COMPANY
5th and Keeler
Bartlesville Oklahoma 74004 (US)**

(72) Inventor: **Chen-Chi, Martin Ma
1616 S.E. Whitney Lane
Bartlesville Oklahoma 74006 (US)**

(74) Representative: **Dost, Wolfgang, Dr.rer.nat.,
Dipl.-Chem. et al
Patent- und Rechtsanwälte Bardehle-
Pagenberg-Dost-Altenburg & Partner Postfach
86 06 20
D-8000 München 86 (DE)**

**Description**

This invention relates to poly(arylene sulfide) compositions, more particularly, to poly(phenylene sulfide) compositions. In one of its aspects this invention relates to reinforced compositions containing poly(arylene sulfide). In still another of its aspects this invention relates to stampable, reinforced composites containing poly(arylene sulfide). In other aspects of the invention, it relates to methods for producing reinforced composites containing poly(arylene sulfide) and the producing of stamped objects from these composites.

Poly(arylene sulfide), particularly poly(phenylene sulfide) is known to be useful in the production of composites that can be reinforced using fibrous materials. The US 41 15 283 for example discloses an antifriction PAS composition comprising glass fiber reinforcing material in the form of a blend with the polymer. There has been a continuous problem, however, in the preparation of stamped objects reinforced with fibrous mat material in that the objects produced often suffer from lack of sufficient reinforcement, have poor physical characteristics, and lack uniformity in appearance. These characteristics can be caused by poor fiber flow or other poor processability characteristics during stamping. It has now been discovered that excellent results can be obtained in producing stamped objects from poly(phenylene sulfide) composites reinforced with fiber matting not only of glass but also of carbon and combinations of carbon and glass by using only phenylene sulfide polymer having a melt flow within a prescribed range as the matrix in the preparation of the composite stampable sheets.

It is therefore an object of this invention to provide a method for producing stampable sheets of poly(phenylene sulfide) reinforced with fibrous mat. It is another object of this invention to provide a method for producing stamped objects from poly(phenylene sulfide) reinforced with fibrous mat. It is still another object of this invention to provide a stampable composite of poly(phenylene sulfide) reinforced with fibrous mat.

Other aspects, objects and the various advantages of this invention will become apparent upon reading this specification and the appended claims.

In accordance with the invention, a stampable polyarylene sulfide (PAS) fiber mat composite is provided as defined in claim 1. The invention further provides a process for preparing stampable PAS fiber mat composites as defined in claim 7.

In a more particular embodiment of the method of this invention the fiber mat is surrounded with the matrix of poly(phenylene sulfide) by contacting at least one sheet of poly(phenylene sulfide) with at least one side of the fiber mat while applying sufficient heat and pressure to cause the poly(phenylene sulfide) to flow around the fiber mat.

In another embodiment of the method of this invention the fiber mat is impregnated with a slurry of poly(phenylene sulfide) in a carrier liquid; the impregnated mat is then dried to remove the carrier liquid thereby producing a dried impregnated mat; and the dried, impregnated mat is subjected to sufficient heat and pressure to cause the poly(phenylene sulfide) to flow around the fiber mat.

In further embodiments of the invention, at least one, preferably a stack, stampable poly(phenylene sulfide) reinforced with fiber mat composite prepared as described above is subjected to heating to a temperature range suitable for stamping and, while the composite remains at stamping temperature, sufficient pressure is supplied on the composite material within a stamping press to form an object from the composite material.

The term poly(arylene sulfide) includes homopolymers and the normally solid arylene sulfide copolymers, terpolymers, and the like having melting or softening points of at least 300°F (149°C) and more preferably from about 400°F to about 900°F (204°—482°C). Other examples of poly(arylene sulfides) are poly(4,4' - biphenylene sulfide), poly(2,4 - tolylene sulfide), a copolymer prepared from p - dichlorobenzene, 2,4 - dichlorotoluene and sodium sulfide, and the like.

The poly(arylene sulfide) resins, often abbreviated PAS, contemplated in the compositions of this invention include those described in U.S. Patent 3,354,129 issued to Edmonds, Jr. and Hill, Jr. on November 21, 1967 and those described in U.S. Patent 3,919,177. The presently preferred polymer is poly(phenylene sulfide), often abbreviated PPS.

As set out above and as will be demonstrated below in the examples, the present invention is based on the discovery that for use in compositions reinforced with fibrous material PPS must have a flow rate in the range of about 4 to about 350 g/10 min. to achieve an adequate processability and appearance and preferably the flow rate should fall within a range of about 4 to about 80 g/10 min. These ranges of flow rates can be correlated with melt viscosity at 300°C and a shear rate of 200 $sec^{-1}$ i.e., 4—350 g/10 min. is equivalent to a melt viscosity in a range of about 1200 (12,000) to about 100 Pa · s (1,000 poise) and a range of about 4 to about 80 g/10 min. is equivalent to a melt viscosity range of about 1200 (12,000) to about 300 Pa · s (3,000 poise). It has been found that at flow rate of lower range (melt viscosity of higher range) processability of the resin is poor and at flow rate above (melt viscosity below) the inventive range there is poor fiber flow and poor uniformity in the resin matrix upon processing the compositions by stamping operations.

The preferred reinforcing material useful in the present invention is made up carbon fiber, or a mixture of glass and carbon fiber. The fibers can be continuous or they may be cut or chopped. If continuous fibers are not used, the length of the fibers will usually fall within the range of about 0.64 cm (0.25 in.) to about

EP 0 134 973 B1

25.4 cm (10 in.) preferably within a range of about 1.2 cm (0.5 in.) to about 5.1 cm (2.0 in.). Fiber mat made from continuous fiber can contain a binding material. Fiber mat that does not have continuous fibers usually will have a binder material particularly for the shorter fiber lengths. Binders usually are chosen from thermoplastic materials including PPS and thermoset plastics.

It is further within the scope of this invention to use wholly aromatic polyamide fiber mat material as the reinforcing agent. Useful wholly aromatic polyamides can be chosen from those having a melting or decomposition temperature of at least 350°C as set forth in Encyclopedia of Polymer Science and Technology, Vol. 10, 1969, Interscience Publishers, pp. 583—593, incorporated here by reference, particularly fibers of poly(p - phenylene terephthalamide), poly(p - phenylene isophthalamide), poly(m - phenylene isophthalamide), and the like.

It is also within the scope of this invention to use metal fiber mat material as the reinforcing agent. Any metal known to be useful in forming fibers mats can be used in this invention. Among those suitable are iron and its steel alloys, cobalt, nickel, chromium, tungsten, copper and its brass alloys, zinc, magnesium, aluminum and the like.

It is also within the scope of this invention to include metallized, conductive fiber mat material, i.e., metal coated fiber, as the reinforcing agent. Commercially available metallized glass mat or metallized carbon mat having a sufficient amount of metal chosen from those known to be useful in metallizing such aluminum, nickel, chromium and the like to provide electrical conductivity can be used in end products where shielding from electromagnetic induction, especially radio frequency induction will provide an advantage.

Other fiber-forming inorganic materials which can be used in the reinforcing agent in this invention can be chosen from those set out in Encyclopedia of Polymer Science and Technology, Vol. 6, 1967, Interscience Publishers, pp. 610—668, incorporated here by reference, particularly fibers of beryllia, magnesia, alumina, silica, zirconia, thoria, boron, boron nitride, boron carbide, silicon carbide, alumino-silicate, and the like.

When mixtures of carbon and glass fibers are used it will be shown below in Example 5 and Table III that varying the ratio of carbon to glass fibers produces mats that are all usable. It has been found, however, that better physical properties for the compositions are obtained when the ratio of poly(phenylene sulfide) matrix to fiber reinforcement is in a range of about 20 weight percent PPS:80 weight percent fiber mat to about 80 weight percent PPS matrix:20 weight percent fiber mat, preferably about 40 weight percent PPS matrix:60 weight percent fiber mat to about 70 weight percent PPS matrix:30 weight percent fiber mat.

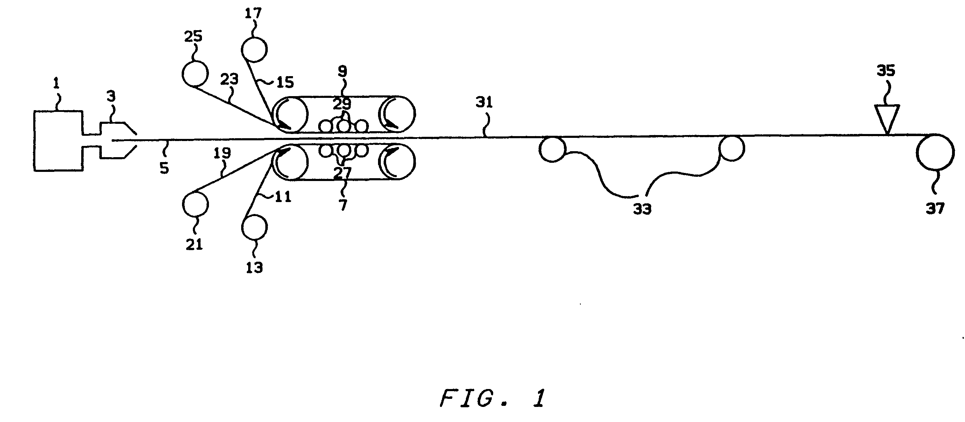

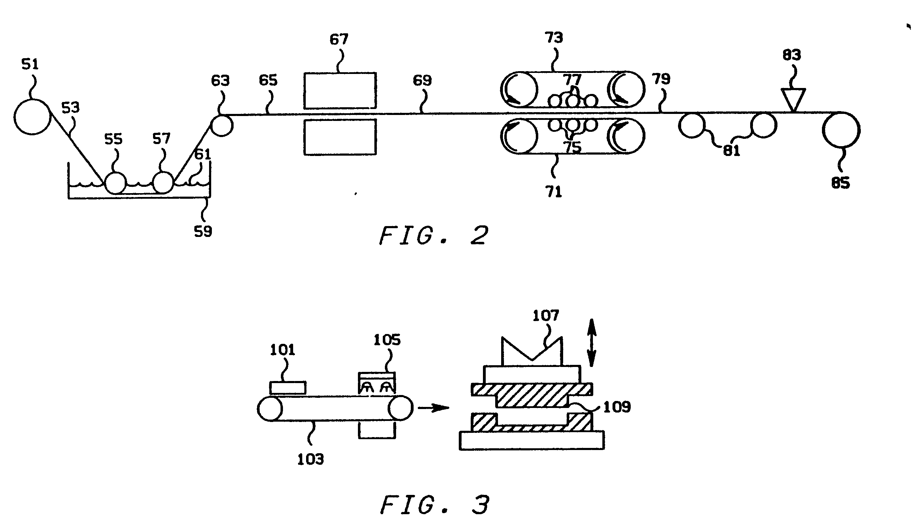

The method for producing the reinforced, stampable composite of PPS and fiber mat according to this invention encompasses any method by which the fiber mat material can be surrounded with a matrix of PPS, including PPS powder impregnation and subsequent melting of the PPS. Two of the preferred embodiments for producing the stampable, reinforced composite will be outlined below, described in conjunction with the drawing in which Figure 1 is a schematic representation of a continuous process for laminating PPS sheets with fiber mat, Figure 2 is a schematic representation of a continuous process for impregnating fiber mat with PPS to produce the composite, and Figure 3 is a schematic representation of a semi-continuous process for stamping objects from stampable, reinforced composites. Figure 1 is a continuous process similar to the unitary process shown in Example 1. Figure 2 is a continuous process similar to the unitary process set out in Example 3. The stamping operation of Figure 3 is similar to that set out in Example 1.

Referring now to the drawing. In Figure 1, a method for preparing reinforced, stampable PPS/fiber mat composites can be described. An extruder (1) passes molten PPS through a die head (3) to produce a sheet of PPS (5) which passes between heated steel belts (7), (9). Also passed between the heated steel belts are PPS sheet (11) unrolled from roll (13) and PPS sheet (15) unrolled from roll (17). Passed between the PPS extrudate (5) and the unrolled PPS sheet (11), (15) are mats of fibrous material (19) unrolled from roll (21) and fibrous mat (23) unrolled from roll (25). These sheets of material form the strata of a laminate passing between heated steel belts (7), (9) and compressed by pressure rolls (27), (29) at a temperature and pressure sufficient to cause flow of PPS around the fiber mat producing a unitary sheet of fibrous reinforcing material surrounded in a matrix of PPS (31), generally in a range of about 277°C (530°F) to about 343°C (650°F), preferably about 288°C (550°F) to about 327°C (620°F) and a range of about 10 psi (.07 MPa) to about 5000 psi (34.5 MPa), preferably about 50 psi (.34 MPa) to about 1000 psi (6.9 MPa). This sheet cools as it is forwarded on support rolls (33) either to a cutting device (35) to produce sheets of predetermined length or onto a wind-up roll (37).

Obviously, the extruder (1) and either one of the sheets of fiber mat reinforcement (19), (23) could be omitted so that all of the matrix and reinforcement material is supplied from preprepared rolls of material or extruded material could be substituted for the rolled up PPS sheets (13), (17). The illustrated method of preparation provides basis for a number of variations of type of feedstock for this process.

Referring now to Figure 2, a roll of fiber mat (51) unrolls to provide a sheet of fiber mat (53) which passes under redirecting bars (55), (57) to be directed through a slurry bath (59) of PPS and aqueous solution at a speed so that sufficient PPS is taken up into the fiber mat to provide the required coating of the fiber. After passing through the slurry (61) and over redirect bar (63) the slurry impregnated fiber mat (65) is passed through heater (67) where it is heated sufficiently to remove the carrier liquid, usually in a range of

3

# EP 0 134 973 B1

about 288°C (550°F) to about 343°C (650°F), and can be heated sufficiently to make the polymer tacky, usually in a range of about 302°C (575°F) to about 327°C (620°F). The dried, coated fiber mat (69) then passes between heated steel belts (71), (73) and is pressed by pressure rolls (75), (77) to provide sufficient heat and pressure, as described above, to cause flow of polymer around the fiber mat reinforcement to produce a fiber mat in a matrix of PPS (79). This composite (79) cools as it is passed over support rolls (81) either to a cutting device (83) or to a wind-up roll (85).

Referring now to Figure 3, sheets of composite (101), either singly or stacked as strata to form a laminate, are passed by belt (103) through a heater (105) in which the temperature is raised sufficiently for the composite to be molded by stamping. The heated composite, or stacked composites, are then passed into a stamp press (107) which can be a hand press or preferably a hydraulic press, wherein sufficient pressure is applied while the composite is still at stamping temperature to mold sheet into the shape of press die (109). Stamping temperature for the composites generally will be within a range of 288°C (550°F) to 343°C (650°F), preferably within a range of 302°C (576°F) to 316°C (600°F). Stamping pressure will be within a range of 1000 psi (6.9 MPa) to 10000 psi (69 MPa), preferably within a range of 1500 psi (10.3 MPa) to 6000 psi (41.3 MPa). After being held in the die for sufficient time to obtain molded shape, generally within a range of about .5 min to about .2 min. the molded object can be removed.

The materials used as feed for the extruder or as feed rolls or slurry in the processes just described are readily obtained in commerce as will be shown in the examples that follow. These examples should be taken as illustrative and not as being exclusive.

Example I

In this example the formation of stampable poly(phenylene sulfide)/fiber mat composites is described. First poly(phenylene sulfide) (PPS) sheets were prepared by extrusion of granular PPS of various flow rates. The PPS resin was dried in a vacuum oven at 177°C/710 mm Hg for 16 hours, and then extruded through a 5-hole die into stands using a ZSK-53 extruder at a screw speed of about 150 r.p.m., a processing rate of 20 kg/h, a vacuum at the barrel vent of 23—24 mm Hg, and a temperature of the melt at the die of about 333°C. The strands were chopped under water into pellets as they were extruded, were dried, and then extruded into sheets by means of a NRM extruder through a slot die having a width of 20.3 cm (8 in.) and a height of about 0.25 mm (10 mils), at a temperature of about 320°C.

Several PPS sheets of about 0.25 mm (0.01 in.) thickness (cross-section: 15.2×15.2 cm (6″×6″) or 25.4×25.4 cm (10″×10″)) were plied up alternately with several layers of fibers mats (e.g., carbon fiber mats or 50/50 glass-carbon hybrid fiber mats) such that the PPS content of the laminate was about 70 weight-% and the glass content was about 30 weight-%. A typical plying pattern was: 3 PPS sheets—1 fiber mat—3 PPS sheets—1 fiber mat—3 PPS sheets—1 fiber mat—3 PPS sheets.

The plied up PPS sheets and fiber mats were placed in a picture frame mold (e.g., of 15.2×15.2 cm or 25.4×25.4 cm (6″×6″ or 10″×10″) cross-section), between the plates of a hydraulic press (e.g., one marketed by Pasadena Hydraulic Industries). First the plies were heated in the press to about 316—327°C (600—620°F) for about 2 minutes, while a contact force of about 2 tons (pressure: about 0.76 MPa (110 psi)) was applied. Then the force was increased to about 15 tons (pressure: about 5.72 MPa (830 psi)), and the plied PPS sheets and fiber mats were heated under the above force/pressure for 3—5 minutes at about 327°C (620°F). Finally, the laminated composite sheet was allowed to cool under a force of 15 tons and was then removed from the mold for stamping tests.

The laminated PPS/fiber composite sheet was heated in an oven until it was tacky and then transferred under a stamping press mold (preferably having the shape of a rectangular tray), which was cooler than the preheated composite sheet. The stamping press was closed, and a stamping pressure (manually or, preferably, hydraulically generated) of 6.89—13.8 MPa (1,000—2,000 psi) was applied for 30—60 seconds. The stamped composite object was visually evaluated regarding its appearance (fiber flow and uniformity).

Example II

In this example is detailed the determination of the effect of the flow rate of PPS on the surface appearance and internal uniformity of the stamped composite laminates containing glass fiber mats/or carbon fiber mats or carbon/glass hybrid fiber mats, prepared according to the procedure described in Example I. The PPS resin was either commercially produced in the Ryton® plant of Phillips Petroleum Company in Borger, Texas, or in the Ryton® pilot plant at the Phillips Research Center in Bartlesville, Oklahoma. Comparative runs were made with glass fiber mat obtained from International Paper Company (IP; 77 West 45th Street, New York, N.Y.) having a mat weight of about 33.9 g/m² (1.0 ounce per square yard) and a fiber length of about 3.18 cm (1.25 inches) bonded with a high solubility thermoplastic binder. Another glass fiber mat—Owens Corning's (OC; Fiberglass Tower, Toledo, OH) continuous fiber mat M8610 which weighed 305—458 g/m² (1.0—1.5 ounces per square foot) and contained a thermoset binder—was also used. The carbon fiber mat, also obtained from International Paper Company, had a weight of about 33.9 g/m² (1 ounce per square yard), and contained carbon fibers of 2.5 cm (1 in.) length. A carbon/glass hybrid fiber mat containing 50 weight-% carbon fibers of about 2.5 cm (1 in.) length and 50 weight-% glass fibers of 3.8 cm (1.5 in.) length and weighing about 33.9 g/m² (1 ounce per square yard) was obtained from International Paper Company.

All tested stamped PPS/fiber mat composites had a PPS content of about 70 weight-%. The ratings of stamped representative composites employing PPS resins of various flow rates are summarized in Table I.

4

The following rating scale was applied: good (fibers rather uniformly dispersed in the resin matrix); fair (few undispersed fiber bundles visible); poor (large fiber bundles visible; non-uniform distribution of these bundles in the resin matrix).

TABLE I

| Run | Flow rate[1] of PPS | Viscosity[2] of PPS | Fiber mat | Appearance rating |
|-----|------|------|------|------|
| 1 | 25 | — | IP Glass | Good |
| 2 | 25 | — | OC Glass | Good |
| 3 | 64 | — | IP Glass | Good |
| 4 | 64 | — | OC Glass | Good |
| 5 | 77 | — | IP Glass | Good |
| 6 | 77 | — | OC Glass | Good |
| 7 | 124 | — | IP Glass | Poor[3] |
| 8 | 124 | — | OC Glass | Poor[3] |
| 9 | 137 | — | IP Glass | Fair |
| 10 | 137 | — | OC Glass | Fair |
| 11 | 380 | — | IP Glass | Poor |
| 12 | 380 | — | OC Glass | Poor |
| 13 | 19 | — | OC Glass | Good |
| 14 | 72 | — | OC Glass | Good |
| 15 | 135 | — | OC Glass | Fair |
| 16 | 2,220 | — | OC Glass | Poor |
| 17 | 42 | 430 (4,300) | IP Glass | Good |
| 18 | 42 | 430 (4,300) | IP Carbon | Good |
| 19 | 42 | 430 (4,300) | IP Hybrid | Good |
| 20 | 260 | 110 (1,100) | IP Carbon | Fair |
| 21 | 260 | 110 (1,100) | IP Hybrid | Fair |
| 22 | 350 | — | IP Glass | Fair |
| 23 | 2,200 | 25 (250) | IP Glass | Poor |
| 24 | 2,200 | 25 (250) | IP Carbon | Poor |
| 25 | 2,200 | 25 (250) | IP Hybrid | Poor |
| 26 | 4.4 | — | IP Glass | Good |
| 27 | 4.4 | — | IP Carbon | Good |
| 28 | 8.8 | 860 (8,600) | IP Glass | Good |
| 29 | 8.8 | 860 (8,600) | IP Carbon | Good |

5

[1] expressed in grams/10 minutes; determined according to ASTM D1238, modified to a temperature of 316°C and a total pressure of 5.0 kg.

[2] apparent steady shear melt viscosity, expressed in Pa · s (poise); determined by means of a capillary rheometer at 300°C and a shear rate of 200 sec$^{-1}$.

[3] rating was between "poor" and "fair", it is believed that the stamping conditions were sufficiently different (e.g., lower temperature of sample) to cause the poorer appearance.

Data in Table I show that stamped objects having the best, i.e., described as "good", appearance and uniformity rating in the tests were those prepared with PPS resin having a flow rate of about 4—80 g/10 min. (melt viscosity: about 1200—300 Pa · s (12,000—3,000 poise)). Composites of fair appearance contained PPS having a flow rate of about 80—350 g/10 min. (melt viscosity: about 300—100 Pa · s (3,000—1,000 poise)). For the preparation of stamped composites prepared in accordance with the procedure described in Example I, PPS resin having a flow rate > 350 (melt viscosity: less than about 100 Pa · s (1,000 poise)) was not suitable because of poor fiber flow and poor uniformity in the resin matrix.

Example III

In this example the preparation of stampable PPS/fiber mat composites by slurry impregnation is described. A slurry of PPS in water was prepared by ball milling 2,000 grams of PPS (flow rate: about 2000 g/10 min), 3,000 grams of distilled water, 715 grams of propyl glycol and 55 grams of Emulphor EL 620 wetting agent (a polyoxyethylated vegetable oil, marketed by GAF Corporation, New York, N.Y.) for about 24 hours.

Several 25×25 cm (10"×10") pieces of fiber mats were impregnated with this aqueous PPS slurry and dried in an oven. The amount of PPS on the dried, impregnated fiber mats ranged from 50—70 weight-%. Stampable composite sheets were made by heating these dried impregnated pieces for 1 minute in a mold at about 327°C (620°F), under a force of 1—2 tons, and thereafter for 8—12 minutes, under a force of 4—5 tons. The composites were allowed to cool under a force of about 3 tons. No stamping tests were carried out using these composite sheets.

Example IV

Table II summarizes pertinent physical properties of representative laminated PPS/fiber mat composites (before stamping) prepared essentially in accordance with the procedure of Example I. The flow rate of the PPS resin used was about 67 g/10 minutes. The fiber mats employed (10—12 weight-%) were those described in Example II, plus International Paper's Kevlar® 29 fiber mat containing poly (p-phenylene terephthalamide) fibers of 3.8 cm (1.5 inch) length and weighing about 68 g/m$^2$ (2.0 ounces per square yard). The hybrid of run 32 was prepared in the laboratory by mixing IP glass and IP carbon mats at a 1:1 weight ratio. Run 31 with IP glass fiber mat is included in Table II for comparison of the physical properties.

TABLE II

| | Run | | | | |
|---|---|---|---|---|---|
| | 30 | 31 | 32 | 33 | 34 |
| Fiber mat | IP Carbon | IP Glass | Lab hybrid | IP Hybrid | IP Kevlar® |
| Fiber content, weight-% | 10.0 | 10.0 | 10.5 | 10.4 | 11.7 |
| Flexural modulus[1], MPa | 6749 | 4193 | 6017 | 5573 | 3963 |
| Flexural strength[1], MPa | 160 | 102 | 166 | 163 | 116 |
| Tensile at break[2], MPa | 102.8 | 49.8 | 95.7 | 89.1 | 93.6 |
| Elongation[2], % | 1.4 | 1.3 | 1.6 | 1.6 | 2.2 |
| Shore D hardness[3] | 95 | 93 | 93 | 92 | 90 |
| Izod impact, notched[4], J/m | 69 | 125 | 109 | 106 | 124 |
| Izod impact, unnotched[4], J/m | 163 | 205 | 248 | 183 | 230 |
| Heat distortion[5], °C | 275 | 134 | 275 | 266 | 191 |
| Specific gravity | 1.314 | 1.394 | 1.374 | 1.316 | 1.318 |

[1]determined according to ASTM D790
[2]determined according to ASTM D638
[3]determined according to ASTM D2583
[4]determined according to ASTM D256
[5]determined according to ASTM D648

Example V

In this example laminated PPS/fiber mat composites prepared from 70 weight-% PPS sheets having a flow rate of 67 g/10 minutes and 30 weight-% of fiber mats: 100% IP glass mat, 100% IP carbon mat, and mixtures (hybrids) of these two mats having various glass: carbon weight ratios. These laminated composites were prepared in accordance with the method described in Example I. Pertinent physical properties (before stamping) are listed in Table III. The properties for 100% glass mat (run 35) are included for comparison purposes.

TABLE III

| | Run | | | | | | |
|---|---|---|---|---|---|---|---|
| | 35 | 36 | 37 | 38 | 39 | 40 | 41 |
| Weight-% carbon mat | 0 | 20 | 40 | 50 | 60 | 80 | 100 |
| Weight-% glass mat | 100 | 80 | 60 | 50 | 40 | 20 | 0 |
| Flexural modulus, MPa | 5916 | 7906 | 9699 | 9205 | 10070 | 11279 | 13710 |
| Flexural strength, MPa | 174 | 186 | 196 | 156 | 193 | 205 | 239 |
| Tensile at break, MPa | 142 | 153 | 161 | 163 | 161 | 175 | 203 |
| Elongation, % | 2.6 | 2.1 | 1.6 | 1.5 | 1.5 | 1.3 | 1.3 |
| Izod impact, notched, J/m | 380 | 354 | 293 | 253 | 242 | 186 | 129 |
| Izod impact, unnotched, J/m | 749 | 786 | 536 | 466 | 462 | 423 | 45.4 |
| Heat distortion, °C | 276 | 275 | 268 | 274 | 266 | 270 | 270 |
| Specific gravity | 1.549 | 1.527 | 1.504 | 1.479 | 1.477 | 1.461 | 1.401 |

Data in Table III show the physical properties of composites containing 30 weight-% carbon, glass and hybrid fiber mats. These compositions were superior to those containing only 10 weight-% fiber mats (see Table II).

Example VI

In this example the preparation of an electrically conductive PPS/fiber mat composite (suitable for shielding from electromagnetic induction, especially radio frequency induction) is described. A metallized, conductive glass mat having a glass fiber diameter of 0.019 mm (0.73 mils), aluminum coating in an amount of 37 weight percent, and a monofilament D.C. resistance of 2.5 ohm per centimeter (Rohmhoglass, marketed by Lundy Electronics Systems, Inc. Pompano Beach, Florida) was laminated on both sides with two thin MR03 PPS sheets (flow rate: 67 g/10 minutes) in a press of 327°C (620°F), under a contact force of about 2 tons, for 4 minutes. The laminate was allowed to cool in a cold press. It showed good fiber flow and had an electrical resistance of 3.0 ohms (1.0 amp/3.0 volts).

**Claims**

1. A stampable polyarylene sulfide (PAS) fiber mat composite comprising fiber chosen from metal, carbon, a mixture of carbon and glass, wholly aromatic polyamide, mixtures of fiber forming inorganic materials and wholly aromatic polyamide, fiber forming boron, beryllia, magnesia, alumina, zirconia, thoria, boron nitride, boron carbide, silicon carbide and alumino-silicate, within a matrix of PAS wherein said PAS has a flow rate of 4 to 350 g/10 min., as determined by ASTM D 1238 modified to a temperature of 316°C and a total pressure of 5 kg.

2. The composite of claim 1, characterized in that said fiber mat comprises carbon fiber.

3. The composite of claim 1, characterized in that said fiber mat is of metal fibers on metal coated fibers.

4. The composite of any of the preceding claims, characterized in that inorganic materials are chosen from among beryllia, magnesia, alumina, silica, zirconia, thoria, boron, boron nitride, boron carbide, silicon carbide, and alumino-silicate.

5. The composite of any of the preceding claims, characterized in that said PAS is a polyphenylene sulfide (PPS).

6. The composite of any of the preceding claims, characterized in that the PAS has a melt flow of 4 to 80 g/10 min.

7. A process for preparing stampable PAS fiber mat composites comprising surrounding a fiber mat chosen from metal, carbon, a mixture of carbon and glass, wholly aromatic polyamide, mixtures of fiber forming inorganic materials and wholly aromatic polyamide, fiber forming beryllia, magnesia, alumina, zirconia, thoria, boron nitride, boron carbide, silicon carbide and alumino-silicate, within a matrix of PAS wherein said PAS has a flow rate of 4 to 350 g/10 min., as determined by ASTM D 1238 modified to a temperature of 316°C and a total pressure of 5 kg.

8. The process of claim 7 characterized in that surrounding said fiber mat with PAS comprises contacting at least one sheet of PAS to at least one side of said fiber mat while applying heat and pressure to cause said PAS to flow around said fiber mat.

9. The process of claim 8 characterized in that a sheet of PAS is contacted with both sides of said fibrous mat.

10. The process of claim 8 or 9 characterized in that surrounding said fiber mat with PAS comprises (1) impregnating said mat with a slurry of PAS and a carrier liquid, (2) drying said impregnated mat to remove carrier liquid thereby producing a dry, impregnated mat, and (3) applying heat and pressure to said dried, impregnated mat to cause said PAS to flow around said fiber mat.

11. The process of any of claims 7 to 10 characterized in that materials as defined in any of claims 2 to 6 are used.

12. The process for preparing stamped PAS/fiber mat composites characterized by subjecting at least one stampable PAS/fiber mat composite as defined in any of claims 1 to 6 to heating to a temperature range suitable for stamping and subsequently while the composite remains at said stamping temperature supplying pressure on the composite material within a stamping press to form an object from said composite.

**Patentansprüche**

1. Pressfähiger Polyarylensulfid - (PAS) - Fasermatten - Verbundstoff, enthaltend Fasern, ausgewählt unter Metall, Kohlenstoff, einem Gemisch aus Kohlenstoff und Glas, vollaromatischem Polyamid, Gemischen aus faserbildenden anorganischen Materialien und vollaromatischem Polyamid, faserbildendem Bor, Berylliumoxid, Magnesiumoxid, Aluminiumoxid, Zirkoniumoxid, Thoriumoxid, Bornitrid, Borcarbid, Siliciumcarbid und Aluminosilikat innerhalb einer Matrix aus PAS, wobei das PAS eine Fliessgeschwindigkeit von 4—350 g/10 min, bestimmt gemäss ASTM D 1238, modifiziert auf eine Temperatur von 316°C und einen Gesamtdruck von 5 kg, aufweist.

2. Verbundstoff nach Anspruch 1, dadurch gekennzeichnet, dass die Fasermatte Kohlenstoff-Fasern enthält.

3. Verbundstoff nach Anspruch 1, dadurch gekennzeichnet, dass die Fasermatte aus Metallfasern oder mit Metall beschichteten Fasern besteht.

4. Verbundstoff nach einem der vorstehenden Ansprüche, dadurch gekennzeichnet, dass die anorganischen Materialien unter Berylliumoxid, Magnesiumoxid, Aluminiumoxid, Siliciumoxid, Zirkoniumoxid, Thoriumoxid, Bor, Bornitrid, Borcarbid, Siliciumcarbid und Aluminosilikat ausgewählt sind.

5. Verbundstoff nach einem der vorstehenden Ansprüche, dadurch gekennzeichnet, dass es sich beim PAS um ein Polyphenylensulfid (PPS) handelt.

6. Verbundstoff nach einem der vorstehenden Ansprüche, dadurch gekennzeichnet, dass das PAS einen Schmelzfluss von 4—80 g/10 min aufweist.

7. Verfahren zur Herstellung von pressfähigen PAS - Fasermatten - Verbundstoffen, umfassend das Umgeben einer Fasermatte, die unter Metall, Kohlenstoff, einem Gemisch aus Kohlenstoff und Glas, vollaromatischem Polyamid, Gemischen aus faserbildenden anorganischen Materialien und vollaromatischem Polyamid, faserbildendem Berylliumoxid, Magnesiumoxid, Aluminiumoxid, Zirkoniumoxid, Thoriumoxid, Bornitrid, Borcarbid, Siliciumcarbid und Aluminosilikat ausgewählt ist, mit einer Matrix aus PAS, wobei das PAS eine Fliessgeschwindigkeit von 4—350 g/10 min, bestimmt gemäss ASTM D 1238, modifiziert auf eine Temperatur von 316°C und einen Gesamtdruck von 5 kg, aufweist.

8. Verfahren nach Anspruch 7, dadurch gekennzeichnet, dass man beim Umgeben der Fasermatte mit PAS mindestens eine Folie aus PAS mit mindestens einer Seite der Fasermatte in Kontakt bringt, wobei man Wärme und Druck anwendet, um das PAS dazu zu bringen, dass es um die Fasermatte fliesst.

9. Verfahren nach Anspruch 8, dadurch gekennzeichnet, dass eine Folie aus PAS mit beiden Seiten der faserigen Matte in Kontakt gebracht wird.

10. Verfahren nach Anspruch 8 oder 9, dadurch gekennzeichnet, dass das Umgeben der Fasermatte mit PAS folgendes umfasst: (1) Imprägnieren der Matte mit einer Aufschlämmung von PAS und einer Trägerflüssigkeit, (2) Trocknen der imprägnierten Matte zur Entfernung von Trägerflüssigkeit unter Bildung einer trockenen, imprägnierten Matte und (3) Anwendung von Wärme und Druck auf die getrocknete, imprägnierte Matte, wobei das PAS dazu gebracht wird, dass es um die Fasermatte fliesst.

11. Verfahren nach einem der Ansprüche 7 bis 10, dadurch gekennzeichnet, dass Materialien gemäss der Definition in einem der Ansprüche 2 bis 6 verwendet werden.

12. Verfahren zur Herstellung von gepressten PAS/Fasermatten - Verbundstoffen, dadurch gekennzeichnet, dass man mindestens einen pressfähigen PAS/Fasermatten - Verbundstoff gemäss der Definition in einem der Ansprüche 1 bis 6 einer Erwärmung auf einen zum Pressen geeigneten Temperaturbereich unterwirft und anschliessend unter Belassen des Verbundmaterials bei der Presstemperatur Druck an das Verbundmaterial innerhalb einer Presse anlegt, um einen Gegenstand aus dem Verbundmaterial zu formen.

**Revendications**

1. Composite sulfure de polyarylène (PAS)/mat de fibres emboutissable comprenant des fibres choisies parmi des fibres métalliques, des fibres de carbone, un mélange de fibres de carbone et de fibres de verre, des fibres de polyamide totalement aromatiques, des mélanges de matières minérales formant des fibres et de polyamide totalement aromatique, du bore, de l'oxyde de béryllium, de la magnésie, de l'alumine, de l'oxyde de zirconium, de la thorine, du nitrure de bore, du carbure de bore, du carbure de silicium et de l'aluminosilicate formant des fibres dans une matrice de PAS, dans lequel ce PAS a un indice d'écoulement de 4 à 350 g/10 min. tel que déterminé par l'ASTM D 1238 modifiée pour une température de 316°C et une pression totale de 5 kg.

2. Composite selon la revendication 1, caractérisé en ce que ce mat de fibres comprend des fibres de carbone.

3. Composite selon la revendication 1, caractérisé en ce que ce mat de fibres est constituée de fibres métalliques ou de fibres revêtues de métal.

4. Composite selon l'une quelconque des revendications précédentes, caractérisé en ce que les matières minérales sont choisies parmi l'oxyde de béryllium, la magnésie, l'alumine, la silice, l'oxyde de zirconium, le thorine, le bore, le nitrure de bore, le carbure de bore, le carbure de silicium et les aluminosilicates.

5. Composite selon l'une quelconque des revendications précédentes, caractérisé en ce que ce PAS est un poly(sulfure de phénylène) (PPS).

6. Composite selon l'une quelconque des revendications précédentes, caractérisé en ce que le PAS a un indice de fusion de 4 à 80 g/10 min.

7. Procédé de préparation de composites de PAS-mat de fibres emboutissable comprenant l'enveloppement d'un mat de fibre choisi parmi des fibres métalliques, des fibres de carbone, des mélanges de fibres de carbone et de verre, des fibres de polyamide totalement aromatiques, des mélanges de matières minérales formant des fibres et de fibres de polyamide totalement aromatiques, de l'oxyde de béryllium, de la magnésie, de l'alumine, de la zircone, de la thorine, du nitrure de bore, du carbure de bore, du carbure de silicium et de l'aluminosilicate formant des fibres dans une matrice de PAS dans laquelle ce PAS a un indice d'écoulement de 4 à 350 g/10 min., tel que déterminé par l'ASTM D 1238 modifié pour une température de 316°C et une pression totale de 5 kg.

8. Procédé selon la revendication 7, caractérisé en ce que cet enveloppement du mat de fibres avec du PAS comprend la mise en contact d'au moins une feuille de PAS avec au moins un côté de ce mat de fibres tout en appliquant une chaleur et une pression pour faire écouler le PAS autour de ce mat de fibre.

9. Procédé selon la revendication 8, caractérisé en ce qu'une feuille de PAS est mise en contact avec les deux côtés de ce mat de fibre.

10. Procédé selon les revendications 8 ou 9, caractérisé en ce que l'enveloppement de ce mat de fibre avec du PAS comprend (1) l'imprégnation de ce mat avec une bouillie de PAS et d'un liquide de support, (2) le séchage de ce mat imprégné pour éliminer le liquide de support, produisant ainsi un mat sec, imprégné et (3) l'application de chaleur et de pression à ce mat séché, imprégné pour faire couler ce PAS autour de ce mat de fibres.

11. Procédé selon l'une quelconque des revendications 7 à 10, caractérisé en ce que l'on utilise des matières telles que définies dans l'une quelconque des revendications 2 à 6.

12. Procédé de préparation de composites PAS/mat de fibres enboutis, caractérisé en ce qu'on soumet au moins un composite PAS/mat de fibres emboutissable tel que défini dans l'une quelconque des revendications 1 à 6, à un chauffage dans un intervalle de températures convenant pour l'emboutissage, puis, tandis que le composite reste à cette température d'emboutissage, en ce qu'on applique une pression à la matière composite avec une presse d'estampage pour former un objet à partir de ce composite.

FIG. 1

FIG. 2

FIG. 3

EP 0 134 973 B1